## Europäisches Patentamt
## European Patent Office
## Office européen des brevets

(19)

(11) Numéro de publication: **0 263 030 B1**

(12)

# FASCICULE DE BREVET EUROPEEN

(45) Date de publication du fascicule du brevet:
**07.11.90**

(21) Numéro de dépôt: **87402178.5**

(22) Date de dépôt: **30.09.87**

(51) Int. Cl.⁵: **C03B 23/023**, C03B 23/033,
C03B 27/04

(54) **Bombage et trempe de plaques de verre défilant sur un lit de conformation courbe dans la direction du défilement.**

(30) Priorité: **01.10.86 FR 8613704**

(43) Date de publication de la demande:
**06.04.88 Bulletin 88/14**

(45) Mention de la délivrance du brevet:
**07.11.90 Bulletin 90/45**

(84) Etats contractants désignés:
**AT BE CH DE ES FR GB IT LI LU NL SE**

(56) Documents cités:
**EP-A- 0 133 114**
**EP-A- 0 143 691**
**FR-A- 1 420 731**
**FR-A- 2 554 437**
**US-A- 4 139 359**
**US-A- 4 218 232**

(73) Titulaire: **SAINT-GOBAIN VITRAGE INTERNATIONAL,**
**18, avenue d'Alsace, F-92400 Courbevoie(FR)**

(72) Inventeur: **Letemps, Bernard, 5, Avenue du Gros**
**Buisson, F-60150 Thourotte(FR)**
Inventeur: **Gonzales Blasquez, Ignacio, c/Jonquillos**
**No. 4 La Muntanyeta, El Vendrell Tarragone(ES)**

(74) Mandataire: **Leconte, Jean-Gérard et al, Saint-Gobain**
**Recherche 39, Quai Lucien Lefranc,**
**F-93304 Aubervilliers Cedex(FR)**

## Description

La présente invention concerne le bombage et la trempe de plaques de verre au cours de leur défilement sur un lit de conformation constitué par une série de rouleaux conformateurs disposés selon un trajet à profil courbe dans la direction de défilement des plaques de verre.

Il est connu par le document FR-A 2 433 488, de bomber et de tremper simultanément des plaques de verre en les faisant progresser dans un dispositif constitué essentiellement de deux nappes et rouleaux cylindriques disposés le long d'un profil courbe, des buses de soufflage étant en outre intercalées entre les rouleaux. Les plaques de verre sont laminées et pressées entre les rouleaux des deux nappes et simultanément soumises au soufflage d'air froid, si bien qu'elles ressortent bombées et trempées.

Ce dispositif antérieur possède une capacité de production élevée, mais le verre n'a d'une part pas la qualité, notamment optique, souhaitée, d'autre part présente certains défauts de formage, en particulier sur le bord avant et le bord arrière des plaques de verre.

Il a par ailleurs été proposé par le document FR-A 2 549 465, ayant servi de base pour les préambules des revendications indépendantes 1 et 6, de faire défiler les plaques de verre entre deux nappes de rouleaux, disposées le long d'une courbe, d'une machine de bombage et de trempe en vue de bomber lesdites plaques dans un premier temps, puis de les tremper dans un second temps, des buses de soufflage étant alors intercalées entre les rouleaux de chaque nappe, dans la zone aval de la machine réservée à la trempe.

Dans ce dispositif antérieur, les plaques de verre reposent sur les rouleaux de la nappe inférieure et sont tenues par les rouleaux de la nappe supérieure. Il ne s'agit plus comme dans le cas précédent, de laminage et de pressage des plaques de verre entre des rouleaux inférieurs et supérieurs, mais il n'en demeure pas moins que des rouleaux supérieurs existent et que même s'ils sont montés souplement à l'aide de ressorts pour éviter d'appuyer trop fortement sur le verre, ils le touchent, exercent une certaine pression qui bien que faible existe quand même et qui du fait justement de sa faiblesse qui est recherchée, nécessite un montage particulier desdits rouleaux supérieurs et un réglage fin.

Il en résulte une certaine complexité de la machine et une nécessité d'opérer des réglages fins de positionnement des rouleaux de la nappe supérieure par rapport aux rouleaux de la nappe inférieure. Cette complexité de machine et de réglage est encore accrue lorsque les rouleaux employés ne sont pas cylindriques mais sont des éléments de conformation à profil variable dans la direction transversale de la machine, en particulier des tiges cintrées.

Par ailleurs de légères marques d'appui des rouleaux ou autres éléments supérieurs de maintien du verre qui peuvent faire le même office que des rouleaux, peuvent être visibles, principalement dans le cas de mauvais réglables, en particulier sur l'émail dont on revêt parfois la périphérie ou d'autres zones des vitrages, ce émail en face supérieure des plaques de verre n'étant pas totalement durci au moment du passage dans la machine de bombage.

La présente invention vise à remédier aux inconvénients des dispositifs et vitrages de l'art antérieur à savoir essentiellement défauts des vitrages, marques sur l'émail déposé sur les vitrages, complexité des machines.

Elle propose pour cela un procédé de bombage et de trempe de plaques de verre défilant à plat sur un lit de rouleaux disposés le long d'un profil courbe, à concavité tournée vers le haut, dans lequel les plaques de verre défilent à une vitesse élevée au moins égale à 10 cm/seconde et acquièrent le profil correspondant au profil du lit de conformation sous l'effet combiné de la gravité et de la vitesse sans l'appui de rouleaux ou autres moyens de maintien supérieurs, une aide à l'avancement étant fournie aux plaques de verre, et une barrière à l'air de trempe étant constituée à la séparation entre la zone de bombage.

Avantageusement, la courbe des rouleaux de conformation est tangente au plan des moyens d'amenée des plaques de verre, de sorte que le passage desdits moyens d'amenée aux moyens de conformation se fait sans à-coup.

Avantageusement pour des rouleaux espacés d'une distance de l'ordre de 30 à 70 mm et de préférence de l'ordre de 50 à 60 mm pour du verre de 3 mm d'épaisseur, la vitesse de défilement des plaques de verre est de l'ordre de 10 à 24 cm/seconde et de préférence de l'ordre de 15 à 18 cm/seconde.

De préférence, à l'extrémité de la zone de bombage une aide à l'avancement est fournie aux plaques de verre notamment dans la mesure où la pente de ladite extrémité de zone de bombage est élevée et que les plaques de verre ont tendance à ralentir leur progression sur les rouleaux malgré leur rotation à vitesse constante, et à glisser.

De préférence également, à la limite aval de la zone de bombage, une barrière à la pénétration de l'air de trempe dans la zone de bombage est prévue.

L'invention propose également une machine de bombage et de trempe de plaques de verre comportant un lit de rouleaux de conformation à profil courbe dans la direction d'avancement des plaques de verre dans laquelle d'éventuels rouleaux supérieurs destinés à être au-dessus du plan des plaques de verre à bomber, à l'exception toutefois de celui ou de ceux situés à la sortie extrême de la zone de bombage, ne sont disposés qu'à une distance par rapport à la surface coubre qui repose sur les rouleaux inférieurs, qui est supérieure à l'épaisseur des plaques de verre à traiter, au moins un et de préférence un seul rouleau supérieure étant monté à la limite de la zone de bombage espacé du rouleau inférieur qui lui fait face d'une distance telle qu'il est en appui sur la face supérieure des plaques de verre lorsqu'elles défilent sans lui.

Avantageusement à l'extrémité de sortie de la zone de bombage une aide à l'avancement des plaques de verre ainsi qu'une barrière à l'air de trempe vers la zone de bombage est prévue, cette aide et cette barrière étant notamment constituées par un couple de rouleaux, le dernier rouleau inférieur du poste de bombage et un rouleau supérieur disposé en contact avec la face supérieure des plaques de verre à bomber et à tremper.

L'invention sera maintenant décrite plus en détail en référence aux figures jointes qui représentent :

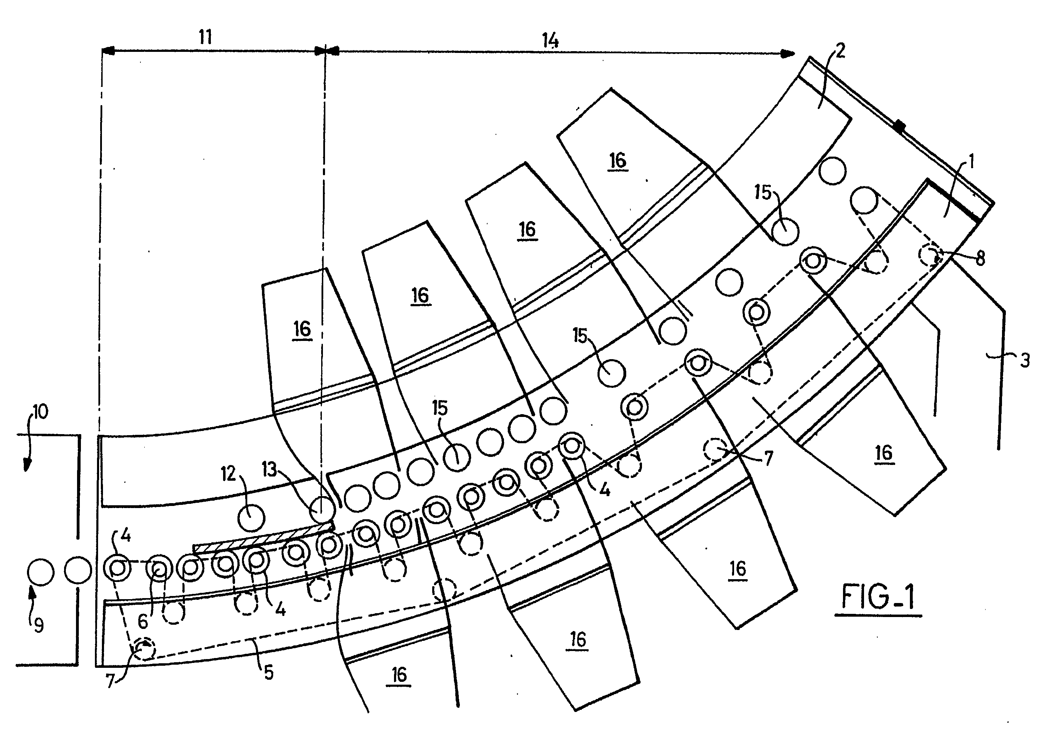

. Figure 1 : une vue schématique d'une installation de bombage et de trempe de plaques de verre selon l'invention,

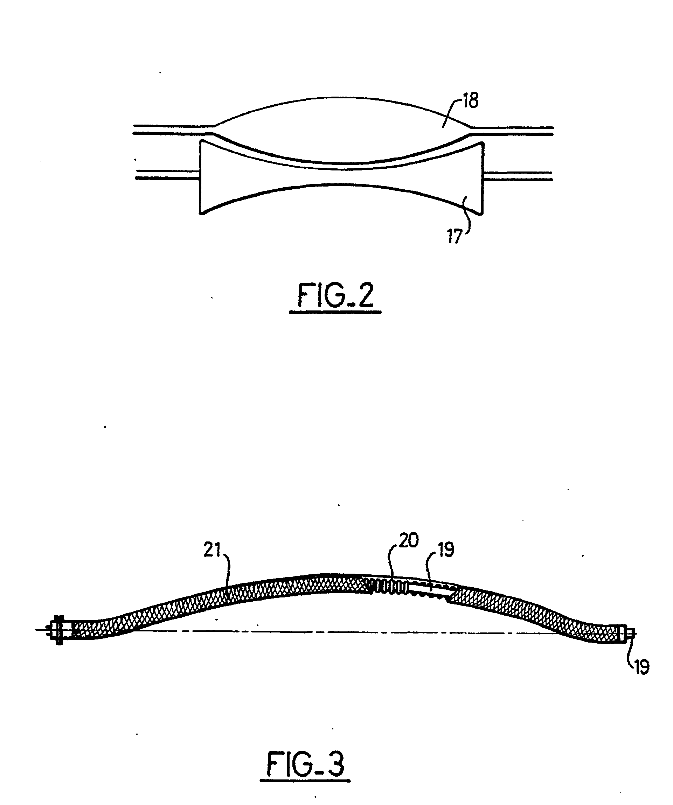

. Figure 2 : une vue d'un couple de rouleaux à profil courbe pouvant être disposé à la sortie du poste de bombage,

. Figure 3 : une vue d'un couple de rouleaux constitués par des tiges cintrées revêtues d'une gaine tubulaire tournante.

La vue schématique de la figure 1 montre une installation de bombage et de trempe de plaques de verre selon l'invention, dans laquelle les moyens de support desdites plaques de verre sont disposés le long d'un profil courbe régulier, à concavité tournée vers le haut.

Elle possède deux éléments de chassis 1 et 2, un élément inférieur 1 et un élément supérieur 2, courbés dans la direction de leur longueur et portés par un bâti 3.

L'élément inférieur 1 est équipé d'organes 4 de support du verre tels des rouleaux droits disposés parllèlement les uns aux autres dans la largeur dudit élément, mis en rotation sur eux-mêmes par exemple par l'intermédiaire d'une chaine 5 agissant sur des pignons 6 disposés en extrémité des rouleaux, maintenue tendue à l'aide de pignons tendeurs et de rappel 7, entrainée à partir d'un arbre moteur 8. Les rouleaux disposés les uns à la suite des autres déterminent un lit de conformation pour les plaques de verre, à profil courbe, disposé à la suite d'un convoyeur 9 d'amenée des plaques de verre traversant un four 10 de réchauffage du verre. De préférence, le lit de conformation est tangent au convoyeur 9 de façon à proposer aux plaques de verre un chemin continu, régulier, sans à-coup, cassure ou sursaut.

L'élément supérieur 2, au début de la zone de bombage 11 ne possède aucun rouleaux, sauf éventuellement des rouleaux tels que 12 très espacés par rapport aux rouleaux inférieurs 4, de façon que des plaques de verre, défilant sur les rouleaux inférieurs 4, dans la mesure où elles s'affaissent normalement sur le lit de conformation et en épousent la forme, ne les touchent pas. Dans la mesure où de tels rouleaux supérieurs 12 existent, leur position est réglable de telle façon qu'ils soient au moins à une distance de l'ordre de 0,3 ou 0,4 mm de la surface supérieure des plaques de verre.

Ainsi lorsque des plaques de verre de 3 mm d'épaisseur seront introduites dans la machine, on règlera les éventuels rouleaux supérieurs 12 pour qu'ils soient à 3,3 ou 3,4 mm voire même 3,6 mm ou plus de la surface reposant sur les rouleaux inférieurs 4.

Ces rouleaux supérieurs 12 pourront être placés sensiblement à l'aplomb des rouleaux inférieurs 4. Puis en limite de la zone de bombage, juste avant de pénétrer dans la zone de trempe de la machine, l'élément supérieur de chassis 2 est équipé d'un moyen d'aide à l'avancement des plaques de verre et d'une barrière à la pénétration de l'air de trempe dans la zone de bombage. Avantageusement les fonctions de ces deux moyens sont remplies par un seul et même organe constitué par un rouleaux supérieur 13 disposé pour être en contact avec la surface supérieure des plasques de verre, ce rouleau supérieur 13 étant monté en regard du rouleau inférieur 4 à l'extrémité de la zone de bombage et étant entrainé à la même vitesse que les rouleaux inférieurs 4.

Avantageusement pour éviter un pincement trop important du verre, ce rouleau supérieur 13 à position réglable, est monté de façon élastique par exemple comme décrit dans le document de brevet français n o 2 549 465 déjà cité.

Pour faciliter l'avancement des plaques de verre, en limite de la zone de bombage 11, dans la mesure où cette zone est très redressée et où les plaques de verre risquent beaucoup d'être mal entrainées, deux ou trois rouleaux supérieurs 13 peuvent être mis en oeuvre.

Dans la zone de trempe 14 qui fait immédiatement suite à la zone de bombage 11, sont disposés en plus des éléments de support inférieurs constitués par les rouleaux 4, des rouleaux supérieurs 15 du même type que les rouleaux 13, en contact avec le verre et en appui sur lui, ainsi que des buses de soufflage telles que 16 destinées à souffler un gaz de refroidissement et en général de l'air, sur le verre en vue de le tremper. Ces buses 16 sont disposées de façon à souffler le gaz de refroidissement à la fois sur la face inférieure et la face supérieure du verre. Elles possèdent des tubulures ou des fentes qui tant sur le dessus que sur le dessous s'approchent des faces des plaques de verre. Cependant, pour la clarté des dessins ces tubulures ou ces fentes ne sont pas montrées, seules sont représentées les gaines principales conduisant aux tubulures ou aux fentes.

L'évacuation des plaques de verre à la limite de la zone de trempe 14 peut être réalisée comme décrit dans le document de brevet français n o 2 549 465 déjà cité, c'est-à-dire par un ensemble basculant non représenté sur les figures, et délivrant les plaques de verre à un transporteur non représenté, sensiblement horizontal.

Dans la mesure où une courbure complexe est désirée pour les plaques de verre, le dernier couple de rouleaux de la zone de bombage 11, servant à bloquer le passage de l'air de trempe vers la zone de bombage et à aider à la progression des plaques de verre, est constitué par des rouleaux 17 et 18 non plus cylindriques mais en forme, ces deux rouleaux ayant des formes complémentaires telles que montrées figure 2.

Ainsi par exemple le rouleau inférieur 17 peut être un rouleau en forme de diabolo tandis que le rouleau supérieur 18 peut être un rouleau en forme de fuseau ou vice-versa.

Dans une variante permettant d'obtenir des plaques de verre de formes complexes, c'est-à-dire ayant une courbure dans la direction longitudinale ainsi qu'une courbure dans la direction transversale tel qu'une calotte approximativement sphérique, les rouleaux inférieurs 4 et supérieurs 12 et 13 de l'ensemble de l'installation sont constitués par des rouleaux cintrés. Il peut s'agir de tiges cintrées 19 telles que montrées figure 3, revêtues chacune d'une gaine tubulaire tournante 20 déformable axialement mais rigide en rotation, reposant sur sa tige cintrée 19 par l'intermédiare de bagues de glissement en graphite, elle-même recouverte d'une protection 21 en fils de verre ou de silice tressés ou tricotés. Il peut s'agir aussi de rouleaux cintrés d'un autre type par exemple des rouleaux cintrés par contreflexion ou par contrainte exercée sur leurs extrémités.

A l'extrémité du poste de bombage deux rouleaux cintrés tels que des tiges cintrées 19 encardrent les plaques de verre, les aident à progresser et empèchent le passage de l'air de trempe vers la zone de bombage. Des éléments conformateurs cintrés tels des tiges 19, revêtues des gaines 20 et des protections 32 sont décrites en détail dans les documents de brevet français 1 476 785, 92 064, 2 129 919, 2 144 523, 2 189 330.

Avantageusement pour faciliter l'accès à l'intérieur de la machine, le chassis inférieur 1 et le chassis supérieur 2 sont éloignables l'un de l'autre par exemple grâce à des vérins non représentés ou dans une variante, ils sont pivotants l'un par rapport à l'autre autour d'une charnière disposée latéralement (ouverture en huitre).

Pour obtenir le bombage de plaques de verre dans la machine décrite ci-dessous, sans qu'il soit besoin d'exercer une pression sur la face supérieure des plaques de verre, on pratique comme indiqué ciaprès.

Les plaques de verre sont réchauffées jusqu'à leur températurre de bombage et de trempe en traversant le four de réchauffage 10. Elles sont ainsi à une température supérieure à 610°, de préférence de l'ordre de 630 à 650°C. Elles pénètrent dans la machine de bombage/trempe de façon régulière, sans àcoups, le chemin courbe qu'elles ont à parcourir dans ladite machine étant tangent au chemin dans le four 10.

Leur vitesse est élevée, au moins égale à 10 cm/seconde, de l'ordre de 10 à 24 cm/seconde et de préférence de 15 à 18 cm/seconde.

Le pas des rouleaux 4 dans la machine de bombage est de l'or dre de 30 à 70 mm et par exemple de l'ordre de 50 à 60 mm notamment pour du verre d'environ 3 mm d'épaisseur. Du fait de la vitesse de progression élevée des plaques de verre, de leur température, elle épousent naturellement la forme du lit de conformation constitué par les rouleaux 4, sans s'affaisser entre lesdits rouleaux.

Les rouleaux supérieurs 12 qui peuvent être présent dans la machine et qui délimitent un passage pour le verre, supérieur d'au moins 0,3 à l'épaisseur du verre, et de préférence de l'ordre de 0,4 à 0,6 mm n'interviennent normalement pas dans le bombage. Non entrainés en rotation par un moyen moteur, ils restent immobiles, ce qui est bien le signe de leur inuitilité en fonctionnement normal.

Cependant au cas où la température du verre ne serait pas tout à fait suffisante, et/ou au cas où de défilement serait trop élevée, ils constituent un moyen de sécurité qui empêcherait le verre d'être en appui sur deux rouleaux 4 espacés du lit de conformation, sans toucher aux rouleaux 4 intermédiaires.

Ils peuvent constituer des moyens aidant au réglage des conditions optimales de fonctionnement de la machine; sachant que ces conditions optimales sont obtenues lorsque ces rouleaux supérieurs n'ont aucune action.

Le bombage de plaques de verre de 3 mm d'épaisseur portées à 650°C, circulant à une vitesse de l'ordre de 15 à 18 cm/seconde, sur un lit de rouleaux inférieurs 4 à pas de 50 à 60 mm environ peut être obtenu sur une distance qui n'est pas supérieure à celle occupée par 7 rouleaux et qui donc peut être aussi courte que 250 à 300 mm.

A l'extrémité de la zone 11 de bombage, le chemin à parcourir est très redressé, ce qui risque d'entrainer un glissement des plaques de verre. Par ailleurs les jets de soufflage d'air de la zone de trempe 14 opposent une résistance à leur pénétration par le bord avant des plaques de verre. En outre, ces jets d'air froid risquent d'aller refroidir la zone de bombage et donc de perturber le bombage.

Pour toutes ces raisons, on prévoit des moyens aidant le verre à continuer à progresser régulièrement et faisant barrière à l'air de trempe. Les plaques de verre passent donc entre un couple de deux rouleaux : un rouleau inférieur 4 et un rouleau supérieur 13 en appui élastique sur la surface du verre.

Le verre continue ensuite sa progression suivant la même trajectoire courbe dans la zone de trempe 14, maintenu cette fois par des rouleaux inférieurs et des rouleaux supérieurs et il subit simulatanément l'action des jets de soufflage. Ensuite il est évacué de la machine.

Dans la mesure où un bombage complexe est recherché, un simple couple de rouleaux en forme du type diabolo/fuseau en extrémité de la zone de bombage procure le résultat attendu.

En variante, les plaques de verre circulent sur un lit de conformation constitué par des rouleaux cintrés notamment des tiges cintrées revêtues de gains tournantes. Les vitesses et températures sont du même ordre que celles déjà indiquées.

Dans le cas d'une double courbure du verre, on préfère obtenir la courbure dont le rayon est le plus faible grâce au lit de conformation à profil courbe dans la direction longitudinale de défilement des plaques de verre, tandis que la courbure la moins prononcée est obtenue par l'action des rouleaux cintrés, rouleaux diabolo ou fuseau, tiges cintrées, tiges en contreflexion, etc...

Dans la mesure où le verre n'a pas besoin d'être trempé, le couple des rouleaux inférieurs 4 et supérieurs 13 n'est plus strictement nécessaire et peut même être supprimé dans la mesure où la pente du lit de rouleaux 4 à l'extrémité de la zone 11 de bombage n'est pas trop élevée et que les plaques de verre peuvent continuer à progresser régulièrement sans glisser. En effet, la gène constituée par l'air froid du poste de trempe n'existe plus, et la difficulté pour le bord avant du verre à pénétrer dans les jets d'air du soufflage de trempe est également supprimée.

Outre la qualité optique exceptionnelle des vitrages obtenus dans une telle machine de bombage, on note également la facilité de bombage de vitrages portant sur leur face supérieure des revêtements d'émail, qui à ce stade de la fabrication ne sont pas encore totalement durcis.

L'absence de rouleaux supérieurs, ou leur position très éloignée lorsqu'ils n'existent qu'en tant que moyens de sécurité fait que la détérioration de l'émail en cours de fabrication n'est plus possible.

**Revendications**

1. Procédé de bombage et de trempe de plaques de verre défilant à plat sur un lit de rouleaux (4) disposés le long d'un profil, courbe à concavité tournée vers le haut, caractérisé en ce que les plaques de verre défilent à une vitesse élevée au moins égale à 10 cm/seconde et acquièrent le profil correspondant au profil du lit de conformation sous l'effet combiné de la gravité et de la vitesse sans l'appui de rouleaux (2) ou autres moyens de maintien supérieurs, une aide à l'avancement étant fournie aux plaques de verre, et une barrière à l'air de trempe étant constituée à la séparation entre la zone de trempe et la zone de bombage.

2. Procédé selon la revendication 1, caractérisé en ce que la vitesse de défilement des plaques de verre est de l'ordre de 10 à 24 cm/seconde et de préférence de l'ordre de 15 à 18 cm/seconde.

3. Procédé selon l'une des revendications précédentes, caractérisé en ce que la courbe du lit de conformation est tangente au plan des moyens d'amenée (9) des plaques de verre immédiatement en amont dudit lit de conformation.

4. Procédé selon l'une des revendications précédentes, caractérisé en ce que au moins le dernier rouleau (17) du lit de conformation est un rouleau en forme et en ce qu'il lui est associé un contre-rouleau de forme complémentaire (18) autorisant ainsi la fabrication de vitrages à courbures multiples.

5. Procédé selon la revendication 4, caractérisé en ce que la courbure des plaques de verre dont le rayon est le plus faible est acquise par le lit de conformation à profil courbe dans la direction longitudinale de défilement, la courbure à rayon plus élevé étant acquise dans la direction transversale des plaques de verre par les rouleaux en forme.

6. Machine de bombage et de trempe de plaques de verre pour la réalisation du procédé selon les revendications 1 à 5 comportant un lit de rouleaux de conformation (4) à profil courbe dans la direction d'avancement des plaques de verre, à concavité tournée vers le haut, caractérisée en ce que d'éventuels rouleaux (2) supérieurs destinés à être au-dessus du plan des plaques de verre à bomber, à l'exception toutefois de celui ou ceux situés à la sortie de la zone de bombage, ne sont disposés qu'à une distance par rapport à la surface courbe qui repose sur les rouleaux inférieurs, qui est supérieure à l'épaisseur des plaques de verre à traiter, au moins un et de préférence un seul rouleau supérieur (13) étant monté à la limite de la zone de bombage espacé du rouleau inférieur (4) qui lui fait face d'une distance telle qu'il est en appui sur la face supérieure des plaques de verre lorsqu'elles défilent sous lui.

7. Machine selon la revendication 6, caractérisée en ce que les éventuels rouleaux supérieurs (2), à l'exception de celui (13) ou ceux situés à la sortie de la zone de bombage sont espacés de la surface courbe qui repose sur les rouleaux inférieurs du lit de conformation d'une distance supérieure d'au moins 0,3 mm, et généralement de l'ordre de 0,4 à 0,6 mm, à l'épaisseur des plaques de verre à traiter.

8. Machine selon l'une des revendications 6 à 7, caractérisée en ce que les rouleaux (4) sont des rouleaux cylindriques.

9. Machine selon l'une des revendications 6 à 7, caractérisée en ce que le ou les couples de rouleaux inférieur(s) et supérieur(s) (17, 18) monté(s) à l'extrémité de sortie de la zone de bombage sont des rouleaux en forme du type diabolo pour l'un et fuseau pour l'autre autorisant ainsi la fabrication de vitrages à double courbure.

10. Machine selon l'une des revendications 6 à 7, caractérisée, en ce que les rouleaux inférieurs (4) de la zone de bombage puis ceux de la zone de trempe sont des rouleaux cintrés du type tiges cintrées revêtues d'une gaine tubulaire tournante, le ou éventuellement les rouleaux supérieurs étant également des tiges cintrées, autorisant ainsi la fabrication de vitrages à double courbure du type calotte sphérique.

11. Machine selon l'une des revendications 9 ou 10, caractérisée en ce que la courbure de rayon le plus faible est celle du lit de conformation à profil courbe dans la direction longitudinale.

12. Machine selon l'une des revendications 6 à 11, caractérisée en ce que les éléments supérieurs et inférieurs peuvent être espacés les uns des autres, notamment par une ouverture en huître.

13. Application du prodédé selon les revendications 1 à 5 au bombage et éventuellement à la trempe de plaques de verre, les conditions de bombage pour du verre d'environ 3 mm d'épaisseur étant: température du verre 650°C, vitesse de défilement des plaques de 15 à 18 cm/seconde, un seul rouleau supérieur face au dernier rouleau inférieur 4 de la zone de bombage, espacement des rouleaux inférieurs 50 à 60 mm.

**Patentansprüche**

1. Verfahren zum Wölben und Vorspannen von Glasscheiben, die flach auf einem Bett aus Walzen (4) transportiert werden, die längs eines gekrümmten Profils mit einer nach oben zeigenden Konkavität angeordnet sind, dadurch gekennzeichnet, daß die Glasscheiben mit erhöhter Geschwindigkeit von wenigstens 10 cm/s befördert werden und unter Einwirkung von Schwerkraft und Geschwindigkeit ohne den Druck von Rollen (2) oder anderen oberen Halteelementen das Profil des Formgebungsbettes annehmen, wobei eine Hilfe für den Weitertransport der Glasplatte und ein Hindernis für die Abschreckluft am Trennbereich zwischen der Vorspannzone und der Bombage-Zone bereitgestellt wird.

2. Verfahren nach Anspruch 1, dadurch gekennzeichnet, daß die Fördergeschwindigkeit der Glasscheiben im Bereich von 10 bis 24 cm/s und vorzugsweise im Bereich von 15 bis 18 cm/s liegt.

3. Verfahren nach einem der vorhergehenden Ansprüche, dadurch gekennzeichnet, daß die Krümmung des Formgebungsbettes tangential zur Ebene der Zuführeinrichtung (9) für die Glasscheiben unmittelbar stromaufwärts des Formgebungsbettes ist.

4. Verfahren nach einem der vorhergehenden Ansprüche, dadurch gekennzeichnet, daß wenigstens die letzte Walze (17) des Formgebungsbettes eine Profilwalze und ihr eine Gegenwalze mit einer komplementären Form (18) zugeordnet ist, um Glasscheiben mit Mehrfachwölbung herzustellen.

5. Verfahren nach Anspruch 4, dadurch gekennzeichnet, daß die Krümmung der Glasplatten mit schwächstem Krümmungsradius durch das Formgebungsbett mit dem gekrümmten Profil in der Längsrichtung der Förderbewegung und mit dem stärksten Krümmungsradius in der Querrichtung der Glasscheiben durch die Profilwalzen erfolgt.

6. Maschine zur Bombage und zum Vorspannen von Glasscheiben zur Durchführung des Verfahrens nach den Ansprüchen 1 bis 5, mit einem Formgebungsrollenbett (4) mit in Richtung des Glasscheibenvorschubs konkav nach oben gekrümmtem Profil, dadurch gekennzeichnet, daß etwaige obere Walzen (2) über der Ebene der zu wölbenden Glasscheiben mit Ausnahme der oder derjenigen, die am Ausgang der Bombage-Zone angeordnet sind, nur in einem Abstand von der gekrümmten Oberfläche, die auf den unteren Walzen gebildet wird, angeordnet sind, der größer als die Dicke der zu behandelnden Glasscheiben ist, wobei wenigstens eine und vorzugsweise eine einzige obere Walze (13) mit solchem Abstand zur unteren Walze (4), die ihr gegenüberliegt, an der Grenze der Bombage-Zone angebracht ist, daß sie mit der oberen Fläche der Glasscheiben in Druckkontakt steht, wenn diese unter ihr hindurchbewegt werden.

7. Maschine nach Anspruch 6, dadurch gekennzeichnet, daß die etwaigen oberen Walzen (2) mit Ausnahme der (13) oder derjenigen, die am Ausgang der Bombage-Zone angeordnet sind, mit einem Abstand von mehr als wenigstens 0,3 mm, und generell im Bereich von 0,4 bis 0,6 mm und von der Dicke der zu behandelnden Glasscheiben von der gekrümmten Oberfläche angeordnet sind, die durch die unteren Walzen des Formgebungsbettes gebildet wird.

8. Maschine nach einem der Ansprüche 6 bis 7, dadurch gekennzeichnet, daß die Walzen (4) zylindrische Walzen sind.

9. Maschine nach einem der Ansprüche 6 bis 7, dadurch gekennzeichnet, daß die Paare von oberer/oberen und unterer/unteren Walze(n) (17, 18), die im äußeren Bereich des Ausgangs der Bombage-Zone angebracht (ist) sind, Profilwalzen in der Art einer Walze mit Ausbauchung und in der Art einer Walze mit Einbauchung für die andere sind, um die Herstellung von Glasscheiben mit doppelter Wölbung zu ermöglichen.

10. Maschine nach einem der Ansprüche 6 bis 7, dadurch gekennzeichnet, daß die unteren Walzen (4) der Bombage-Zone und die der Vorspannzone gewölbte stangenförmige Stäbe sind, die mit einer rohrförmigen drehbaren Hülle verkleidet sind, wobei die obere Walze oder eventuell die oberen Walzen gleichermaßen gekrümmte Stäbe sind, um die Herstellung von Glasscheiben mit doppelter Wölbung in Art einer sphärischen Kalotte zu ermöglichen.

11. Maschine nach einem der Ansprüche 9 oder 10, dadurch gekennzeichnet, daß die Wölbung geringstem Krümmungsradius die des Formgebungsbettes mit in Längsrichtung gekrümmtem Profil ist.

12. Maschine nach einem der Ansprüche 6 bis 11, dadurch gekennzeichnet, daß die oberen und unteren Elemente voneinander beabstandet sein können, insbesondere durch eine austernförmige Öffnung.

13. Anwendung des Verfahrens nach den Ansprüchen 1 bis 5 zur Bombage und eventuell zum Vorspannen von Glasscheiben, wobei die Bombage-Bedingungen für Glasscheiben von etwa 3 mm Dicke sind: Temperatur des Glases: 650°C, Vorschubgeschwindigkeit der Scheiben: 15 bis 18 cm/s, eine einzelne obere Walze gegenüber der letzten unteren Walze (4) der Bombage-Zone, Abstand der unteren Walzen: 50 bis 60 mm.

**Revendications**

1. A method of bending and quenching plates of glass passing flat onto a bed of rollers (4) disposed along an upwardly concave curved profile, characterized in that the glass plates pass at a high speed at least equal to 10 cm/second and acquire the profile corresponding to the profile of the shaping bed under the combined effect of gravity and speed without bearing against rollers (2) or other upper holding means, a feed means being supplied to the glass plates, and a quenching air barrier being constituted at the division between the quenching zone and the bending zone.

2. A method according to Claim 1, characterized in that the speed of travel of the glass plates is of the order of 10 to 24 cm/second and preferably of the order of 15 to 18 cm/second.

3. A method according to one of the preceding Claims, characterized in that the curvature of the shaping bed is tangential to the plane of the feed means (9) for the glass plates immediately upstream of said shaping bed.

4. A method according to one of the preceding Claims, characterized in that at least the last roller (17) of the shaping bed is a shaped roller and in that there is associated with it a counterroller of complementary shape (18), thereby making possible the production of panes of multiple curvature.

5. A method according to Claim 4, characterized in that the curvature of the glass plates which has the smallest radius of curvature is acquired from the shaping bed having a curved profile in the longitudinal direction of travel, the curvature of larger radius being acquired in the transverse direction of the glass plates from the shaped rollers.

6. Machine for bending and quenching glass plates for carrying out the method according to Claims 1 to 5, comprising a bed of shaping rollers (4) having an upwardly concave curved profile in the direction of advance of the glass plates, characterized in that any upper rollers (2), intended to be above the plane of the glass plates to be bent, with the exception nevertheless of that roller or those rollers situated at the exit from the bending zone, are disposed only at a distance from the curved surface which rests upon the lower rollers which is greater than the thickness of the glass plates to be treated, at least one and preferably one only upper roller (13) mounted at the limit of the bending zone being spaced from the lower roller (4) which is opposite to it by a distance such that it is in bearing against the upper face of the glass plates as they pass beneath it.

7. Machine according to Claim 6, characterized in that the upper rollers (2) that may be present, with the exception of that roller (13) or those rollers situated at the exit from the bending zone, are spaced from the curved surface which rests upon the lower rollers of the shaping bed by a distance greater by at least 0.3 mm, and generally of the order of 0.4 to 0.6 mm, than the thickness of the glass plates to be treated.

8. Machine according to one of Claims 6 to 7, characterized in that the rollers (4) are cylindrical rollers.

9. Machine according to one of Claims 6 to 7, characterized in that the pair or pairs of lower and upper rollers (17, 18) mounted at the exit end from the bending zone are shaped rollers of the diabolo type (concave) for the one and of the spindle type (convex) for the other, thus making possible the production of panes of double curvature.

10. Machine according to one of Claims 6 to 7, characterized in that the lower rollers (4) of the bending zone and then those of the quenching zone are curved rollers of the type comprising curved rods covered with a revolving tubular sleeve, the upper roller or rollers being also curved rods, thus making possible the production of panes of double curvature having the shape of part of a sphere.

11. Machine according to one of Claims 9 or 10, characterized in that the smaller radius of curvature is that of the shaping bed having a curved profile in the longitudinal direction.

12. Machine according to one of Claims 6 to 11, characterized in that the upper and lower elements may be spaced from one another, notably, by an oyster-shaped opening.

13. Application of the method according to Claims 1 to 5 to the bending and possibly to the quenching of glass plates, the bending conditions for glass of approximately 3 mm thickness being: temperature of the glass 650°C, speed of travel of the plates 15 to 18 cm/second, a single upper roller opposite the last roller 4 of the bending zone, spacings between the lower rollers 50 to 60 mm.

FIG-1

FIG.2

FIG.3